Europäisches Patentamt

European Patent Office

Office européen des brevets

(11) Veröffentlichungsnummer: **0 414 244 A2**

# EUROPÄISCHE PATENTANMELDUNG

(21) Anmeldenummer: 90116170.3

(22) Anmeldetag: 23.08.90

(51) Int. Cl.⁵: **C04B 41/65**, A62D 3/00

(30) Priorität: 23.08.89 DE 3927850

(43) Veröffentlichungstag der Anmeldung:
27.02.91 Patentblatt 91/09

(84) Benannte Vertragsstaaten:
AT BE CH DE DK FR GB IT LI NL SE

(71) Anmelder: Baierl & Demmelhuber GmbH &
Co. Akustik & Trockenbau KG
Hörnbachl 1
D-8121 Pähl(DE)

Anmelder: FRAUNHOFER-GESELLSCHAFT
ZUR FÖRDERUNG DER ANGEWANDTEN
FORSCHUNG E.V.
Leonrodstrasse 54
D-8000 München 19(DE)

(72) Erfinder: Baierl, Josef
Hörnbachl 1
D-8121 Pähl(DE)
Erfinder: Sattler, Heinz, Dr.-Ing.
Dierckstrasse 10
D-3300 Braunschweig(DE)

(74) Vertreter: Finsterwald, Manfred, Dipl.-Ing.,
Dipl.-Wirtsch.-Ing. et al
Manitz, Finsterwald & Rotermund
Robert-Koch-Strasse 1
D-8000 München 22(DE)

(54) **Mörtel zur Versiegelung von Spritzasbestzementbeschichtungen.**

(57) Es wird die Verwendung eines eine spezielle Zusammensetzung aufweisenden Spritzmörtels zur Versiegelung von Spritzasbestzementbeschichtungen sowie ein Verfahren zur Durchführung dieser Versiegelung beschrieben, das es ohne Abbruch der Spritzasbestzementbeschichtungen ermöglicht, die von freiwerdenden Asbeststaubpartikeln herruhrenden Gefahren zu beseitigen.

EP 0 414 244 A2

# MÖRTEL ZUR VERSIEGELUNG VON SPRITZASBESTZEMENTBESCHICHTUNGEN

Die Erfindung befaßt sich mit der Beseitigung der von Spritzasbestzementbeschichtungen ausgehenden Gesundleitsgefährdungen.

Spritzasbestzementbeschichtungen wurden in großem Umfang aus Brandschutzgründen insbesondere auf konstruktiven Stahlbauteilen angebracht. Um bei derartigen Beschichtungen eine möglichst hohe Brandschutzwirkung zu erzielen, wurden diese Beschichtungen relativ asbestreich ausgeführt und stellen deshalb aufgrund des unvermeidbaren Freiwerdens zon Asbestpartikeln nach neuesten, gesicherten Erkenntnissen eine besonders ausgepragte Gefahr für die Gesundheit der Menschen dar.

Die Beseitigung dieser Gefahrenquelle stellt ein erhebliches technisches und vor allem auch wirtschaftliches Problem dar, weil die einzige bisher bekannte Moglichkeit der Gefahrenabwendung darin besteht, derartige Spritzasbestzementbeschichtungen abzubrechen bzw. mechanisch zu entfernen und das Abbruchmaterial auf Sonderdeponien zu entsorgen. Diese Vorgehensweise birgt jedoch entscheidende Mängel in sich, die vor allem darin bestehen, daß nicht nur während der Abbrucharbeiten, sondern auch auf unbestimmte Zeit danach hohe Asbeststaubkonzentrationen in der Luft verursacht werden, daß das Abbruchmaterial auch durch das Deponieren nicht endgültig seiner Gefährlichkeit beraubt wird, und daß trotz des erforderlichen großen Aufwands an Kosten für die Abbrucharbeiten, die dabei erforderlichen Sicherheitsmaßnahmen und die Transport- sowie Deponiervorgänge keine Moglichkeit besteht, eine gefährliche Asbeststaubentwicklung und eine e:ntsprechende Erhohung der Asbeststaubanteile in der Luft wirksam zu verhindern.

Aufgabe der Erfindung ist es, eine Moglichkeit zu schaffen, die es gestattet, mit einem Minimum an Kosten und einem Maximum an Erfolgsaussichten die durch Asbeststaub aus Spritzasbestzementbeschichtungen herrührenden Gesundheitsgefährdungen zu beseitigen und gleichzeitig die von den Asbestzementbeschichtungen gewährleistete Brandschutzwirkung zumindest zu erhalten.

Gelöst wird diese Aufgabe nach der Erfindung durch die Verwendung eines physiologisch unbedenklichen, Bewehrungsstoffe in Form von Cellulosefasern und/oder glasigen Fasern enthaltenden Spritzmörtels zum dauerhaft versiegelrden Abdekken der Spritzasbestzementbeschichtungen, wobei das Bindemittelgemisch des Spritzmörtels aus einem alkaliarmen Gemisch einer feingemahlenen, latenthydraulischen Komponente, Kalziumsulfat und Portlandzement besteht und die Massenanteile des Bindemittelgemisches so gewählt sind, daß die alkalische Pufferkapazität des ausgeharteten Spritzmörtels 24 Stunden nach dem Herstellungszeitpunkt in einer definierten wässrigen Prüfsuspension 0,005 Säureäquivalente/100 g Spritzmörtel nicht überschreitet.

Von wesentlicher Bedeutung ist dabei, daß durch diesen physiologisch unbedenklichen Fasermörtel eine absolut sichere Emissionssperre für Asbestpartikel geschaffen werden kann, daß dieser Fasermörtel unter Gewährleistung der chemischen Verträglichkeit eine hohe Haftung zur Asbestzementbeschichtung erbringt, und daß das speziell verwendete Bindemittelgemisch sicherstellt, daß bei hoher Langzeitbeständigkeit des Spritzmortels keinerlei Korrosionseffekte hinsichtlich der Bewehrungsstoffe auftreten können, da in diesem Mörtel keine korrosionsverursachenden Bestandteile vorhanden sind.

Aufgrund der dauerhaften Versiegelung der Spritzasbestzementbeschichtungen bleiben die Brandschutzeigenschaften des ver siegelten Asbestzements erhalten bzw. werden sogar durch die zusätzliche Spritzzementschicht erhöht, und es entfallen alle bisher im Zusammenhang mit den entsprechenden Abbrucharbeiten entstehenden Gefahren und Kosten. Ferner werden auch keinerlei Deponieprobleme geschaffen.

Die Zusammensetzung des Spritzmörtels kann ohne Schwierigkeiten so gewählt werden, daß auch die Anforderungen der Baustoffklasse A 2 nach DIN 4102 erfüllt werden und gleichzeitig die für die Anwendung herkömmlicher Spritzverfahren, wie z.B. des Torkretverfahrens benötigte Konsistenz gegeben ist.

Das sehr sensible Kriterium der Pufferkapazität gestattet es, die Zusammensetzung des Bindemittelgemisches so vorzugeben, daß im Spritzmörtel keine korrosionsverursachenden Bestandteile mehr vorhanden sind und damit die im Spritzmörtel enthaltenen, für dessen Funktion wesentlichen Faserbestandteile die zu fordernde hohe Langzeitbeständigkeit besitzen.

Zur Bestimmung der Pufferkapazität wird wie folgt vorgegangen:

10 g des jeweiligen Werkstoffes werden mit 50 ml aqua dist. versetzt, 24 Stunden lang bei Zimmertemperatur geschüttelt, und anschließend werden 20 ml der Lösung mit 0,1 n HCl bis pH = 7 titriert und der Salzsäureverbrauch auf 100 g Werkstoff in Säureäquivalente umgerechnet.

Bevorzugte Ausführungsformen eines Verfahrens zur risikolosen und wirtschaftlichen Beseitigung der von Spritzasbestzementbeschichtungen ausgehenden Gesundheitsgefährdungen sind in den Anspruchen 2 bis 6 beschrieben.

Von besonderem Vorteil ist es ferner, einen Mörtel von der im Anspruch 1 und auch in den weiteren Ansprüchen angegebenen Zusammensetzung im Zusammenhang mit isoliertem Mauerwerk zu verwenden, wobei in diesem Anwendungsfall insbesondere der Isoliereffekte erbringende Faseranteil deutlich erhöht werden kann. Ein solcher Mortel ist vor allem auch als Fugenmörtel bei hochwärmeisoliertem Ziegelwerk mit Vorteil einsetzbar.

**Ansprüche**

1. Verwendung eines physiologisch unbedenklichen, Bewehrungsstoffe in Form von Cellulosefasern und/oder glasigen Fasern enthaltenden Spritzmörtels zum dauerhaft versiegelnden Abdecken von Spritzasbestzementbeschichtungen und als Wärmeschutzmörtel, insbesondere für wärmeisoliertes Mauerwerk, wobei das Bindemittelgemisch des Spritzmörtels aus einem alkaliarmen Gemisch einer feingemahlenen, latenthydraulischen Komponente, Kalziumsulfat und Portlandzement besteht und die Massenanteile des Bindemittelgemisches so gewählt sind, daß die alkalische Pufferkapazität des ausgehärteten Spritzmörtels 24 Stunden nach dem Herstellungszeitpunkt in einer definierten wässrigen Prüfsuspension 0,005 Säureäquivalente/100 g Spritzmörtel nicht überschreitet.

2. Verfahren zur Beseitigung der von Spritzasbestzementbeschichtungen ausgehenden Gesundheitsgefährdungen,
dadurch **gekennzeichnet,**
daß daß die Spritzasbestzementbeschichtungen mit einem physiologisch unbedenklichen Spritzmörtel, dessen hydraulisch erhärtendes Bindemittel aus 60 bis 85 % gemahlenem Hüttensand, 10 bis 30 % bindemittelfeinem Calciumsulfat und 5 bis 15 % Portlandzement und dessen Bewehrungskomponente, bezogen auf die Masse des Bindemittels, aus 5 bis 30 % Cellulosefasern und/oder glasigen Fasern besteht, unter Ausbildung einer innigen Verbindung asbeststaubemissionsdicht abgedeckt und versiegelt werden.

3. Verfahren nach Anspruch 2,
dadurch **gekennzeichnet,**
daß als Calciumsulfatkomponente Halbhydrat verwendet wird, über dessen Anteil im Bindemittel das verarbeitungsrelevante Erstarrungsverhalten des Spritzmörtels geregelt wird.

4. Verfahren nach Anspruch 3,
dadurch **gekennzeichnet,**
daß für eine langsame Mörtelerstarrung 10 bis 15 % und für eine schnelle Erstarrung 20 bis 30 % CalciumsulfatHalbhydrat verwendet werden.

5. Verfahren nach einem der vorhergehenden Ansprüche,
dadurch **gekennzeichnet,**
daß dem Mörtel zur Eigenschaftsmodifikation neben der Faserkomponente eine anorganische Zuschlagstoffkomponente, insbesondere Mörtelsand der Kornklasse 0 bis 1 mm im Masseverhältnis 0 bis 3, bezogen auf den Bindemittelanteil des Mörtels, zugesetzt wird.

6. Verfahren nach einem der Ansprüche 2 bis 5,
dadurch **gekennzeichnet,**
daß zur Erhöhung der Haftfestigkeiten die Spritzasbestzementbeschichtungen mit Wasser gereinigt, angefeuchtet und durch das Aufspritzen des Sperrmörtels zur verbesserten Haftbrückenbildung mechanisch aufgerauht werden.

7. Verfahren zur Erhöhung der Wärmedämmung von isoliertem Mauerwerk,
dadurch **gekennzeichnet,**
daß ein Mörtel nach einem oder mehreren der vorhergehenden Ansprüche verwendet und dabei insbesondere der Faseranteil wesentlich erhöht wird.